# EUROPÄISCHE PATENTANMELDUNG

(11) **EP 1 892 700 A1**
(43) Veröffentlichungstag der Anmeldung: **27.02.2008**
(21) Anmeldenummer: 07112177.6
(22) Anmeldetag: 10.07.2007
(51) Int. Cl.: G10L 13/08, G10L 15/18

(54) **Verfahren zur Spracherkennung und Sprachwiedergabe**

(30) Priorität: 21.08.2006 DE 102006039126
(71) Anmelder: ROBERT BOSCH GMBH, 70442 Stuttgart (DE)
(72) Erfinder: Korthauer, Andreas, 70499, Stuttgart (DE); Steffens, Frank, 70499, Stuttgart (DE); Waizenegger, Johannes-Markus, 3900, Zikhron Yaacov (IL)

(57) **Zusammenfassung**

Die Erfindung betrifft eine Vorrichtung (1) und/oder ein Verfahren zur Spracherkennung und Sprachwiedergabe insbesondere in einem Dialogsystem zur Steuerung von Vorrichtungen, bei welcher Eingangssignale mittels eines Spracheingabeelements (2) aufnehmbar sind und Ausgangssignale von einem Sprachausgabeelement (3) ausgebbar sind, wobei zur Verarbeitung eines Eingangssignals und/oder eines Ausgangssignals, das nicht in einer vorgebbaren Systemsprache erfolgt, anhand der vorgegebenen Schreibweise der Wörter in der Nicht-Systemsprache eine Lautschrift in der Systemsprache erzeugt wird.

## Beschreibung

### Technisches Gebiet

Die Erfindung betrifft ein Verfahren zur Spracherkennung und/oder zur Sprachwiedergabe, insbesondere für ein Dialogsystem zur Steuerung von Vorrichtungen und eine solche Vorrichtung.

### Stand der Technik

Vorrichtungen und Verfahren zur Spracheingabe sind für Fahrerinformationssysteme beispielsweise durch die DE 199 14 631 A1 bekannt. Bei solchen Systemen wird die Eingabe von Buchstaben oder Zahlen per Spracheingabe realisiert.

Durch die DE 44 27 444 A1 ist eine Einrichtung zur Sprachsteuerung von Anlagen und Geräten bekannt geworden, bei welcher Befehle per Spracheingabe erfolgen können und diese nach Vergleich mit einem dargestellten Befehl als ausgewählt angenommen werden und anschließend umgesetzt werden können. Diese Systeme weisen eine Einschränkung hinsichtlich der verwendbaren Sprachen auf, da nur die vorher ausgewählte Sprache als Systemsprache erkannt werden kann.

Darüber hinaus unterstützen heutige Entertainment-Komponenten oder -Systeme, wie beispielsweise MP3-Player, eine Vielzahl von unterschiedlichen Sprachen mit ihrer Mensch-Maschine-Schnittstelle. Für den Fall der Steuerung dieser Systeme mittels der Sprache muss somit von diesen Entertainment-Komponenten oder -Systemen auch eine Reihe von verwendbaren Sprachen unterstützt werden. Entsprechend muss eine Steuerung dieser Komponenten mittels gesprochener Sprache ebenfalls die unterschiedlichen Sprachen unterstützen. Die Verarbeitung von fremdsprachlichen Worten, wie beispielsweise Begriffen aus der englischen Sprache bei ansonsten voreingestellter deutscher Spracheinstellung als Systemsprache, siehe beispielsweise den Begriff "Playliste" und Titel von Liedern wie beispielsweise englische Lieder eines deutschen Interpreten, in einem solchen System stellt für Vorrichtungen nach dem Stand der Technik Schwierigkeiten dar, da sie Begriffe in einer Nichtsystemsprache nicht korrekt erkennen und/oder wiedergeben können. Systeme und Verfahren zur automatischen Spracherkennung ("Automatic Speech Recognition", ASR) und Sprachsynthese ("text-to-speech", TTS) sind jedoch wichtige Elemente eines natürlichsprachlichen Dialogsystems, die immer wieder Worte oder Begriffe einer Nichtsystemsprache im Zusammenhang mit der Systemsprache verarbeiten.

Heutige kommerzielle Sprachdialog-Systeme sind dabei begrenzt auf die Verwendung einer Systemsprache als sogenannte "Muttersprache" des Systems für Spracheingabe und Sprachausgabe, wie beispielsweise nur Deutsch, nur amerikanisches Englisch, nur britisches Englisch, etc.

Die Verwendung von fremdsprachlichen Wörtern einer Nichtsystemsprache (beispielsweise Englisch) innerhalb der Systemsprache (beispielsweise Deutsch) ist damit gar nicht oder nur in Ausnahmefällen möglich. Insbesondere ist eine beliebige Mischung von nichtsystemsprachlichen und systemsprachlichen Begriffen, beispielsweise innerhalb eines Satzes, nicht zu bearbeiten.

Das grundsätzliche Problem solcher heutiger ASR und TTS-Produkte ist, dass die zu Grunde liegenden statistischen Modelle nur für die Laute einer Sprache gelten und fremdsprachliche Wörter Laute enthalten können, die in der System-Sprache nicht vorhanden sind. Eine Spracherkennung und Sprachsynthese ist deshalb nur möglich, wenn die fremdsprachlichen Wörter durch eine phonetische Transkription (Lautschrift) in der System-Sprache dargestellt werden. Fremdsprachliche Wörter und ihre zugehörige Lautschrift werden dazu beispielsweise in ein Lexikon der Spracherkennung und/oder Sprachsynthese eingetragen.

Dies bedeutet, dass grundsätzlich nicht alle Laute einer fremden Sprache erkannt oder erzeugt werden können, so dass die Einbeziehung von fremdsprachlichen Inhalten in die Systemsprache nur unvollständig verarbeitet werden kann.

### Darstellung der Erfindung, Aufgabe, Lösung, Vorteile

Aufgabe der Erfindung ist es, ein Verfahren zur Spracherkennung und/oder zur Sprachwiedergabe, insbesondere für ein Dialogsystem zur Steuerung von Vorrichtungen und eine solche Vorrichtung zu schaffen, welche gegenüber dem Stand der Technik verbessert sind, wobei insbesondere auch beliebige oder umfangreiche fremdsprachliche Inhalte erkannt und verarbeitet werden können.

Die Aufgabe bezüglich des Verfahrens wird gelöst durch ein Verfahren zur Spracherkennung und/oder Sprachwiedergabe insbesondere in einem Dialogsystem zur Steuerung von Vorrichtungen, bei welcher Eingangssignale mittels eines Spracheingabeelements aufnehmbar sind und Ausgangssignale von einem Sprachausgabeelement ausgebbar sind. Das Eingabesignal ist dabei vorteilhaft ein gesprochenes Wort, ein Buchstabe oder eine Silbe oder zumindest ein Laut. Als Ausgabesignal kann bei der Sprachausgabe entsprechend auch ein Wort oder Laut oder eine Reihe von Lauten ausgegeben werden. Zur Verarbeitung eines Eingangssignals und/oder eines Ausgangssignals, das nicht in einer vorgebbaren Systemsprache erfolgt, wird anhand der vorgegebenen Schreibweise der Wörter in der Nicht-Systemsprache eine Lautschrift in der Systemsprache erzeugt.

Dabei ist es besonders vorteilhaft, wenn die erzeugte Lautschrift in eine Datei oder Liste eingetragen wird, und bei Spracherkennung und Sprachausgabe auf die in der Liste eingetragenen Lautschriften zurückgegriffen wird.

Besonders vorteilhaft ist es, wenn die Ermittlung der Lautschrift durch eine Graphem-zu-Phonem-Umsetzung erfolgt, so dass die Lautschrift in der Nichtsystemsprache vorliegt und anschließend über eine Zuordnung mittels einer Zuordnungsvorschrift für die Laute und/oder Lautfolgen eines Sprachenpaars von der Nichtsystemsprache zur Systemsprache die Lautschrift in der Systemsprache ermittelt wird. Dabei ist es vorteilhaft, wenn die Laute und/oder Lautfolgen für das Sprachenpaar in einer Zuordnungstabelle oder -datei gespeichert sind, auf die zugegriffen werden kann.

Auch ist es zweckmäßig, wenn die Ermittlung der Lautschrift in der Systemsprache über eine Ersetzung von Lauten und/oder Lautfolgen in der nichtsystemsprachlichen Lautschrift erfolgt.

Die Aufgabe bezüglich der Vorrichtung wird gelöst durch eine Vorrichtung zur Spracherkennung und/oder Sprachwiedergabe insbesondere zur Durchführung eines Sprachdialogs zwischen Mensch und Maschine mit einem Spracheingabeelement und einem Sprachausgabeelement, einem Speicher zum Abspeichern und Abrufen von Daten und/oder Signalen mit einer Rechen- bzw. Steuereinheit zur Durchführung eines oben beschriebenen Verfahrens.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer erfindungsgemäßen Vorrichtung; und
- Fig. 2: eine Darstellung zum Ablauf des erfindungsgemäßen Verfahrens.

### Bevorzugte Ausführung der Erfindung

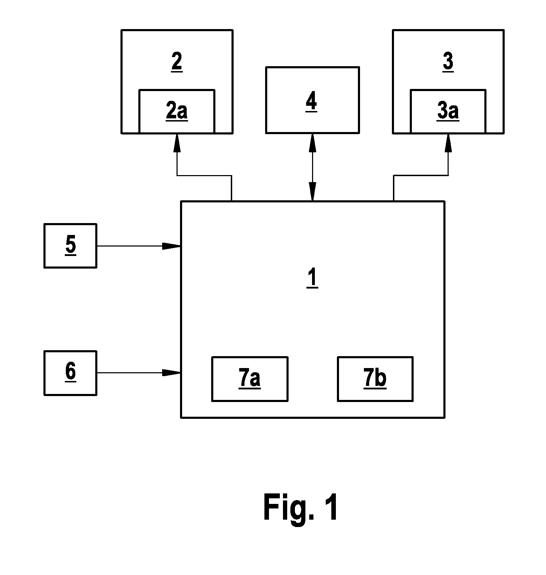

Die Figur 1 zeigt eine schematische Darstellung einer Vorrichtung 1 zur Durchführung eines Sprachdialogs zwischen Mensch und Maschine über eine Mensch-Maschine-Schnittstelle. Dazu weist die Vorrichtung ein Spracheingabeelement 2 (Mittel zur Spracherkennung) und ein Sprachausgabeelement 3 (Mittel zur Sprachsynthese, Text-to-Speech) auf. Das Mittel zur Spracherkennung besitzt dabei vorteilhaft ein Lexikon 2a, in welchem die Lautschriften der Wörter zur Erkennung gespeichert sind. Auch besitzt das Mittel zur Sprachsynthese vorteilhaft ein Lexikon 3b, in welchem die Lautschriften zur Sprachsynthese gespeichert werden können. Vorteilhaft weist die Vorrichtung 1 weiterhin einen Graphem-zu-Phonem-Umsetzer 4 auf. Weiterhin weist die Vorrichtung 1 eine Zuordnungstabelle für Lautfolgen der Sprachenpaare 5, sowie einen Speicher 6 zum Abspeichern und/oder Abrufen von Wörtern in Nichtsystemsprache auf. Darüber hinaus steuert oder implementiert die Vorrichtung 1 eine oder mehrere Geräte und/oder Anwendungen 7a,7b.

Beispielsweise kann die Vorrichtung eine Entertainment-Vorrichtung sein, welche beispielsweise einen MP3-Player, einen CD-Player, einen DVD-Player und/oder einen Radio- oder TV-Empfänger umfasst. Auch kann die Vorrichtung eine andere sein, die eine Sprachdialogsteuerung aufweist. Diesbezüglich kann die Vorrichtung beispielsweise auch ein Navigationssystem für ein Kraftfahrzeug sein oder umfassen.

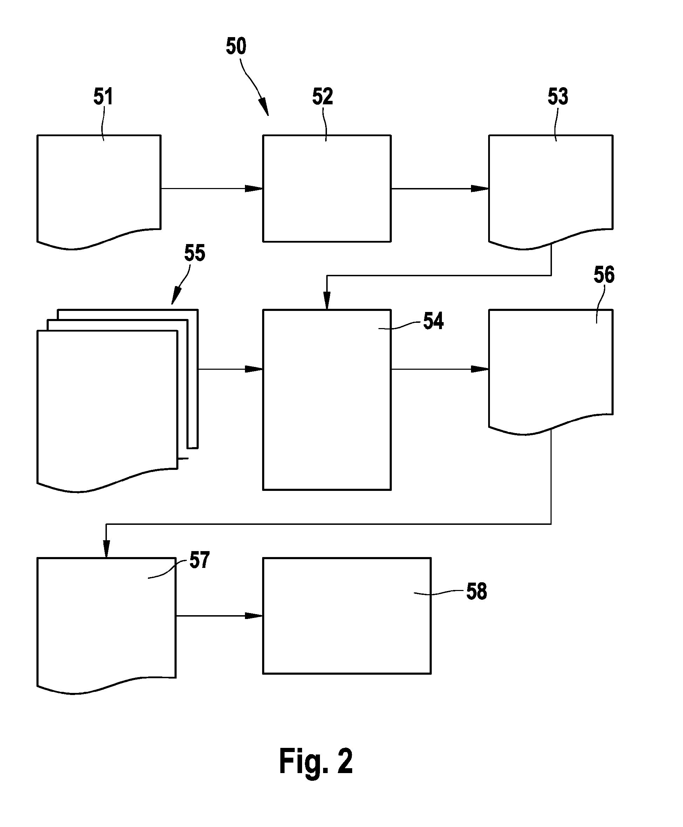

Die Figur 2 zeigt einen Ablauf eines erfindungsgemäßen Verfahrens in einem Diagramm 50, wonach in Block 51 die Schreibweise eines eingegebenen fremdsprachlichen Worts ermittelt, erzeugt und/oder aus einem Speicher übernommen wird. Die Schreibweise des fremdsprachlichen Worts wird in Block 52 mittels einer Graphem-zu-Phonem-Umsetzung in eine Lautschrift, siehe Block 53, des fremdsprachlichen Worts umgesetzt. Dies bedeutet, dass automatisch das fremdsprachliche Wort auf Grundlage seiner Schreibweise in eine Lautschrift in der Fremdsprache umgesetzt wird, die als Grundlage der weiteren Verarbeitung dient. Die Lautschrift aus Block 53 enthält die Laute, wie Phoneme, der Fremdsprache, die zum Teil in der Systemsprache so nicht existieren.

Dazu ist es grundsätzlich vorteilhaft, wenn die Vorrichtung zuvor ermittelt, ob das eingegebene oder empfangene Wort bzw. der eingegebene Laut zur Systemsprache gehört oder fremdsprachlich zu einer Nichtsystemsprache gehört.

Zur weiteren Verarbeitung wird in Block 54 in einem weiteren Schritt eine Zuordnung der fremdsprachlichen Laute oder Lautfolgen zu entsprechenden Lauten oder Lautfolgen in der System-Sprache durchgeführt. Dies geschieht durch eine Ersetzung von Lautfolgen oder Lauten in der generierten fremdsprachlichen Lautschrift anhand einer vordefinierten Zuordnungstabelle, die in Block 55 dargestellt ist.

Die Zuordnungstabelle gemäß Block 55 ist beispielsweise abhängig von dem gewählten Sprachenpaar (Fremdsprache und System-Sprache) sowie von dem vorhandenen Phonem-Satz der Spracherkennungssystems bzw. der Sprachsynthesesystems. Vorzugsweise ist dies jedoch unabhängig von der orthographischen Schreibweise des fremdsprachlichen Wortes.

Für alle relevanten Sprachenpaare ist es vorteilhaft, wenn entsprechende Zuordnungstabellen vorliegen. Die Ersetzung der Laute und Lautfolgen in der fremdsprachlichen Transkription wird vorteilhaft in der Reihenfolge der Länge zusammenhängender Lautfolgen vorgenommen. Beginnend mit der längsten Lautfolge aus der Zuordnungstabelle, die in der fremdsprachlichen Transkription zu finden ist, werden die Laute sukzessive ersetzt bis hin zur Ersetzung einzelner Laute in der fremdsprachlichen Transkription.

In einem weiteren Schritt wird gemäß Block 56 das fremdsprachliche Wort mit der entsprechend generierten Lautschrift in der System-Sprache erzeugt und in Block 57 wird diese generierte Lautschrift in der Systemsprache in eine Liste, wie beispielsweise in ein Ausnahme-Lexikon, des Spracherkennungssystems bzw. der Sprachsynthesesystems eingetragen. Danach kann das fremdsprachliche Wort automatisch im Sprachdialog-System erkannt bzw. ausgegeben werden.

Das Verfahren erzeugt wie oben beschrieben automatisch aus einem geschriebenen fremdsprachlichen Wort eine entsprechende Lautschrift in der System-Sprache. Damit ermöglicht die Erfindung die Verwendung fremdsprachlicher Wörter im Sprachdialog, ohne dass ein vorab definiertes fremdsprachliches Ausnahme-Lexikon mit manuell erstellten phonetischen Transkriptionen erstellt werden muss bzw. vorhanden sein muss. Insbesondere können damit auch während der Laufzeit des Dialogsystems phonetische Transkriptionen für dynamische, das heißt, erst zur Laufzeit bekannte Inhalte erzeugt und verwendet werden. Mit einem manuell erstellten Ausnahme Lexikon wäre dies jedoch nicht möglich.

Mit der Erfindung können z.B. in einem Dialogsystem zur natürlichsprachlichen Steuerung einer Entertainment-Komponente Lied-Titel aus unterschiedlichen Sprachen gemeinsam mit der System-Sprache verwendet werden. Damit sind dann Eingaben möglich wie beispielsweise "Ich möchte gerne das Lied ,Made in England' von ,Elton John' hören". Entsprechend kann das Dialogsystem antworten: " Das Lied ,Made in England' von ,Elton John' wird jetzt gespielt."

## Patentansprüche

1. Verfahren zur Spracherkennung und/oder Sprachwiedergabe insbesondere in einem Dialogsystem zur Steuerung von Vorrichtungen, bei welcher Eingangssignale mittels eines Spracheingabeelements (2) aufnehmbar sind und Ausgangssignale von einem Sprachausgabeelement (3) ausgebbar sind, wobei zur Verarbeitung eines Eingangssignals und/oder eines Ausgangssignals, das nicht in einer vorgebbaren Systemsprache erfolgt, anhand der vorgegebenen Schreibweise der Wörter in der Nicht-Systemsprache eine Lautschrift in der Systemsprache erzeugt wird.

2. Verfahren nach Anspruch 1, **dadurch gekennzeichnet, dass** die erzeugte Lautschrift in eine Datei oder Liste eingetragen wird, und bei Spracherkennung und Sprachausgabe auf die in der Liste eingetragenen Lautschriften zurückgegriffen wird.

3. Verfahren nach einem der vorhergehenden Ansprüche, **dadurch gekennzeichnet, dass** die Ermittlung der Lautschrift durch eine Graphem-zu-Phonem-Umsetzung erfolgt, so dass die Lautschrift in der Nichtsystemsprache vorliegt und anschließend über eine Zuordnungsvorschrift für die Laute und/oder Lautfolgen eines Sprachenpaars von der Nichtsystemsprache zur Systemsprache die Lautschrift in der Systemsprache ermittelt wird.

4. Verfahren nach Anspruch 3, **dadurch gekennzeichnet, dass** die Ermittlung der Lautschrift in der Systemsprache über eine Ersetzung von Lauten und/oder Lautfolgen in der nichtsystemsprachlichen Lautschrift erfolgt.

5. Vorrichtung zur Spracherkennung und/oder Sprachwiedergabe insbesondere zur Durchführung eines Sprachdialogs zwischen Mensch und Maschine mit einem Spracheingabeelement (2) und einem Sprachausgabeelement (3), einem Speicher zum Abspeichern und Abrufen von Daten und mit einer Rechen- bzw. Steuereinheit zur Durchführung eines Verfahrens nach einem der vorhergehenden Ansprüche 1 bis 4.
